## Europäisches Patentamt
## European Patent Office
## Office européen des brevets

(19)

(11) Veröffentlichungsnummer: **0 034 202**
A1

(12) **EUROPÄISCHE PATENTANMELDUNG**

(21) Anmeldenummer: 80106605.1

(22) Anmeldetag: 28.10.80

(51) Int. Cl.³: **B 29 D 23/12**

(30) Priorität: 15.02.80 DE 3005654

(43) Veröffentlichungstag der Anmeldung:
26.08.81 Patentblatt 81/34

(84) Benannte Vertragsstaaten:
FR GB IT

(71) Anmelder: **Messerschmitt-Bölkow-Blohm Gesellschaft mit beschränkter Haftung**
**Postfach 801109**
**D-8000 München 80(DE)**

(72) Erfinder: **Gröber, Josef**
**Köglspergerweg 4**
**D-8000 München 70(DE)**

(54) Maschine zum Wickeln von Kraftübertragungselementen aus faserverstärkten Werkstoffen.

(57) Die Erfindung betrifft eine Maschine zum Wickeln von Kraftübertragungselementen aus unidirektionalen Fasersträngen eines faserverstärkten Werkstoffes mit einem Wickelkern und einer Tränk- und einer Zuführvorrichtung für die Faserstränge, wobei Wickelkern und Zuführvorrichtung relativ zueinander zur Belegung des Wickelkernes mit Windungen gesteuert bewegbar sind. Die Kraftübertragungselemente werden erfindungsgemäß rationell und wirtschaftlich in der weise gefertigt, daß die Maschine (1) einen Träger (Wickelzylinder 5) für mehrere gleichartige Wickelkerne (6) aufweist, die im Umfangsrichtung um den Träger verteilt angeordnet sind, und daß Träger und Zuführvorrichtung (12) zur Belegung sämtlicher Wickelkerne mit Windungen aus einem einzigen Faserstrang (16) relativ zueinander gesteuert bewegbar sind.

Fig. 1

EP 0 034 202 A1

Croydon Printing Company Ltd.

0034202

Messerschmitt-Bölkow-Blohm
Gesellschaft mit
beschränkter Haftung
München

Ottobrunn , 12.2.80
BT01 Cz/Hn - 8666 -

Maschine zum Wickeln von Kraftübertragungselementen aus
faserverstärkten Werkstoffen

Die Erfindung bezieht sich auf eine Maschine zum Wickeln von
Kraftübertragungselementen aus unidirektionalen Fasersträngen
eines faserverstärkten Werkstoffes mit einem Wickelkern und
einer Tränk- und einer Zuführvorrichtung für die Faserstränge,
wobei Wickelkern und Zuführvorrichtung relativ zueinander zur
Belegung des Wickelkernes mit Windungen gesteuert bewegbar sind.

Derartige Kraftübertragungs- bzw. Krafteinleitungselemente aus
unidirektionalen Fasersträngen werden heute vielfach dort eingesetzt, wo starke Belastungen in einer Richtung auftreten. Derartige Kraftübertragungselemente haben oftmals Schlaufen- bzw.
Schleifenform, wobei dann die Faserrichtung innerhalb des Kraftübertragunselementes in Richtung der Belastung läuft. An derartigen schlaufenförmigen Kraftübertragunselementen werden zum
Beispiel Rotorblätter von Hubschraubern über einen Anschlußbeschlag am Rotorkopf befestigt. Derartige Kraftübertragungselemente
wurden bisher entweder in aufwendiger Art im Handwickelverfahren
hergestellt; es sind allerdings auch maschinelle Wickelverfahren
bekannt (vgl. DE-OS 27 36 124).

Die auf diese Weise gefertigten Kraftübertragungselemente sollen
möglichst einheitlich ausgebildet sein, damit die Schwankungen
hinsichtlich Form und Belastbarkeit möglichst gering sind. Dies setzt eine genaue und auch zeitaufwendige Fertigung der einzelnen Elemente voraus. Insbesondere dann, wenn bei der Wickelung der Kraftübertragungselemente mit unterschiedlicher Zugspannung des Faserstrangs gearbeitet wird, sind die Schwankungen verschiedener Elemente zu berücksichtigen. So werden zum Beispiel bei der Fertigung eines Rotorkopfes vier derartige Kraftübertragungselemente benötigt, die jedoch bei der bisherigen Fertigungsart – sei sie manuell oder maschinell – in ihren physikalischen Eigenschaften differieren.

Der Erfindung liegt die Aufgabe zugrunde, eine Maschine zum Wickeln von derartigen Kraftübertragungselementen anzugeben, mit der diese Elemente rationell und wirtschaftlich gefertigt werden können, wobei gleichzeitig die physikalischen Eigenschaften der solchermaßen gefertigten Elemente möglichst geringen Schwankungen unterworfen sein sollen.

Diese Aufgabe ist gemäß der Erfindung dadurch gelöst, daß die Maschine einen Träger für mehrere gleichartige Wickelkerne aufweist, die in Umfangsrichtung um den Träger verteilt angeordnet sind, und daß Träger und Zuführvorrichtung zur Belegung sämtlicher Wickelkerne mit Windungen aus einem einzigen Faserstrang relativ zueinander gesteuert bewegbar sind.

Vorzugsweise sind dabei die Wickelkerne jeweils nacheinander mit nur einer Windung des Faserstranges belegbar.

Mit einer derartigen Maschine können daher mehrere, im Normalfall vier Kraftübertragungselemente gleichzeitig gefertigt werden. Da diese Elemente aus einem Faserstrang hergestellt werden, wobei jeweils die Wickelkerne Windung für Windung nacheinander belegt werden, erhält man vier gleichartige Kraftübertragungselemente, deren physikalischen Eigenschaften praktisch nicht differieren.

Durch die Fertigung aus einem einzelnen Faserstrang ist zum
Beispiel die für die Belastbarkeit wesentliche Zugspannung
des Faserstranges bei der Wicklung bei allen derart auf einem
Träger hergestellten Kraftübertragungselementen gleich.
Außerdem kann die Fertigung stark rationalisiert werden,da
eine derartige Maschine mit verhältnismäßig einfachen Mitteln
durch einen Rechner gesteuert werden kann. Die Fertigungszeit für derartige Kraftübertragungselemente aus faserverstärkten
Werkstoffen wird gegenüber der manuellen Anfertigung wesentlich
und auch gegenüber der bisher bekannten maschinellen Anfertigung
der Elemente nacheinander deutlich verkürzt.

Der Träger für die einzelnen Wickelkerne ist bevorzugterweise
eine Walze, da dann die Zuführeinrichtung für den Faserstrang
lediglich in Achsrichtung dieser Walze bewegt zu werden braucht.
Die Zuführvorrichtung weist dabei ein Führungsstück, z. B.
ein Führungsrohr auf, das nur wenig oberhalb der Walzenoberfläche endet und dort den Faserstrang freigibt. Zwischen den
einzelnen Wickelkernen sind auf der Walze Halte- und Umlenkelemente für den Faserstrang angeordnet, zum Beispiel eine Vielzahl
von Umlenkstiften. Durch die Anordnung der Umlenkstifte und die
Auswahl eines bestimmten Umlenkstiftes bei der Wicklung wird die
Winkellage des Faserstranges in Bezug zu dem Wickelkern bzw. der
Drehachse des Trägers bestimmt. Die Wickelkerne sind jeweils
austauschbar und können auch je nach Anwendungsfall in der Form
variieren. Die Maschine kann auf unterschiedliche Wickelkernformen durch ein einfaches neues Programm umgestellt werden, das
zum Beispiel mittels Kodierschalter eingegeben wird. Außerdem kann
ein vollkommen neues Wickelmuster-Programm über Elektroniklogik-
Steckkarten gefahren werden.Den Wickelvorgang führt die Maschine
danach selbsttätig aus. Während des Wickelvorganges kann das
Bedienungspersonal bereits andere für die Weiterverarbeitung der
Kraftübertragungselemente notwendigen Arbeiten ausführen.

Weitere Ausgestaltungen und Vorteile der Erfindung gehen aus den
Unteransprüchen und der nachfolgenden Beschreibung hervor, in der die Erfindung in einem Ausführungsbeispiel anhand der
Zeichnung näher erläutert ist. In der Zeichnung stellen dar:

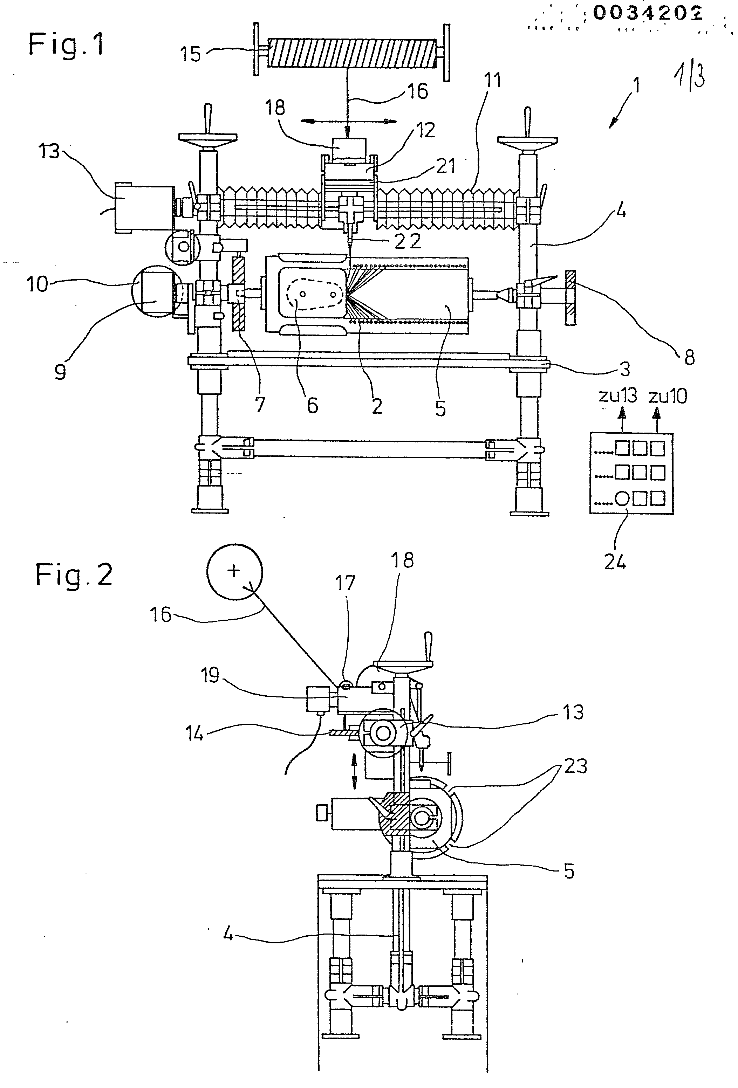

Figur 1      eine nur schematisch dargestellte Ansicht einer Wickelmaschine gemäß der
Erfindung mit einem als Walze ausgebildeten Träger für mehrere Wickelkerne;

Figur 2      eine Seitenansicht auf die Wickelmaschine in Figur 1

Figur 3      eine Aufsicht auf die Walze bei abgenommenen Wickelkern;

Figur 4      eine Teilansicht der Wickelmaschine zur
Darstellung des Wickelvorganges.

Eine Wickelmaschine 1 zum Wickeln mehrerer Kraftübertragungselemente 2 zu gleicher Zeit weist ein Standgerüst 3 mit zwei
lotrechten Pfosten 4 auf. Zwischen den Pfosten ist eine Walze 5
eingespannt, die als Wickelzylinder und Träger für mehrere, in
diesem Falle vier, jeweils um 90° um den Umfang des Wickelzylinders versetzte Wickelkerne 6 dient. Der Wickelzylinder ist
auf seiner einen Seite in einem Mitnehmerkranz 7 und auf der
anderen Seite in einem verstellbaren Gegenhalter 8 gelagert.
Der Mitnehmerkranz 7 ist mit einem Schneckengetriebe 9 verbunden,
welches durch einen Stellmotor 10 angetrieben wird.

Oberhalb des Wickelzylinders 5 ist zwischen den beiden Pfosten 4
ein Querträger 11 vorgesehen, auf dem eine Zuführ- und Tränkvorrichtung 12 gleitend gelagert ist. Die Zuführvorrichtung 12
kann mittels eines Stellmotores 13 entlang dem Querträger 11 verschoben werden, wobei hier als Stellmoter 13 ein Schrittmotor verwendet ist, dessen Schritte durch ein Rasterlineal 14 festgelegt sind, welches parallel zu dem Querträger 11 angeordnet
ist.

Der Stellmotor 10 für die Drehung des Wickelzylinders 5 und der
Schrittmotor 13 für die axiale Verschiebung der Zuführvorrichtung
können selbstverständlich in beiden Richtungen angetrieben
werden.

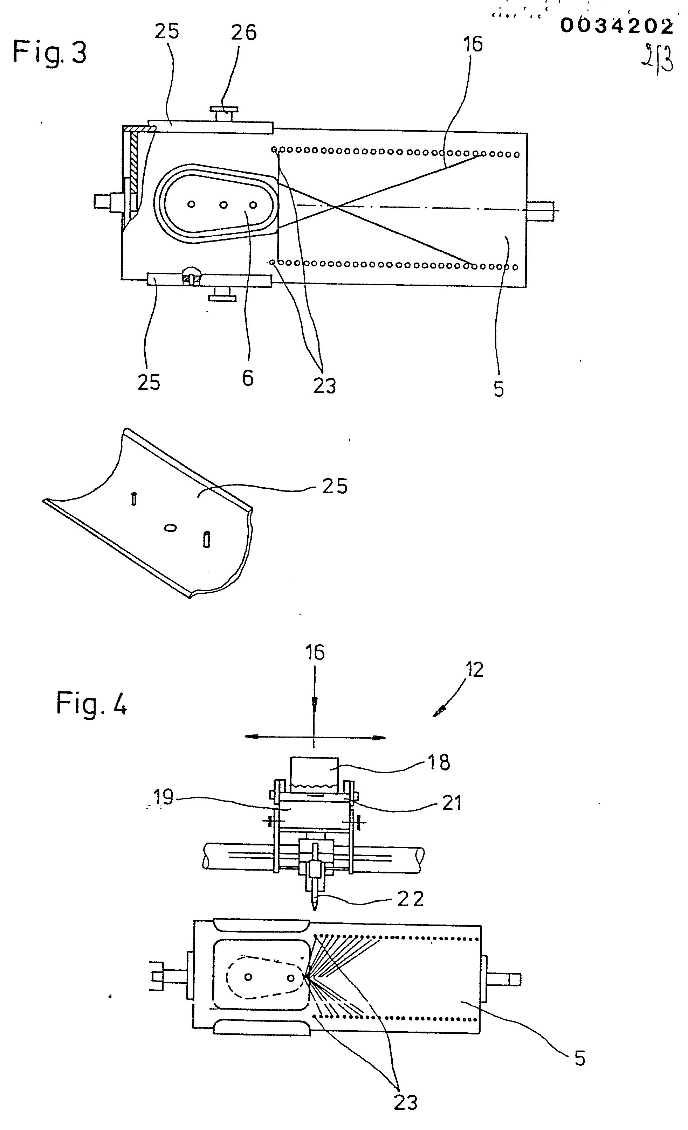

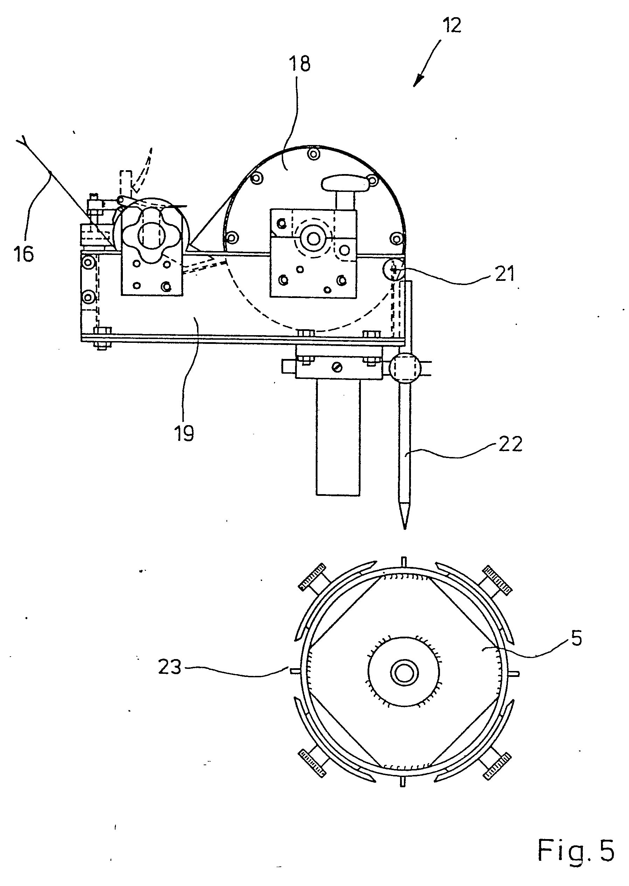

Der Zuführvorrichtung 12 wird von einem Zettelbaum 15 ein Faserstrang 16 zum Beispiel aus Kohle- oder Glasfasern zugeführt.
Der Faserstrang 16 läuft in der Zuführvorrichtung 12 zunächst
unter einer einstellbaren Bremswalze 17 hindurch, mit der die
Zugspannung des Faserstranges 16 eingestellt wird. Hiernach
wird der Faserstrang über eine Tränkwalze 18 geleitet, die in
ihrer unteren Hälfte in ein heizbares Harzbad 19 eintaucht.
Durch das auf der Tränkwalze 18 mitgeführte Harz wird der Faserstrang 16 mit Reaktionsharzmasse (RHM) getränkt. Die Menge der RHM
für die Tränkung des Faserstranges wird in bekannter Weise durch
Harzabstreifer eingestellt. Der Faserstrang 16 wird danach über
eine Führungsrolle 21 in ein Fadenführungsrohr 22 geleitet,
welches nur wenig oberhalb der Oberfläche des Wickelzylinders 5
endet. Der Faserstrang 16 tritt am Ende des Führungsrohres 22
aus und wird an einem Umlenk- bzw. Haltestift 23 auf dem Wickelzylinder verknotet. Derartige Halte- und Umlenkstifte 23 sind
in Achsrichtung des Wickelzylinders jeweils zwischen den Wickelkernen 6 in einer Reihe angeordnet; bei der dargestellten Maschine
sind die vier Wickelkerne auf einer Seite der Walze angeordnet,
während sich die Halte- und Umlenkstifte 23 über die übrige Länge
des Wickelzylinders beginnend von der hinteren Kante der Wickelkerne erstrecken. Wie insbesondere aus Figur 3 ersichtlich kann
damit der Faserstrang auf den Wickelzylindern mit Wickelwinkeln
zwischen etwa 20 und 90° gegenüber der Wickelzylinderachse gewickelt werden.

Der Faserstrang 16 wird von der Vorratsspule 15 dadurch abgewickelt, daß entweder der Wickelzylinder 5 mit dem Stellmotor 10 gedreht und/oder die Zuführvorrichtung 12 mittels des Schrittmotores 13 auf dem Querträger 11 verschoben wird. Die Steuerung der Bewegung von Wickelzylinder und Zuführvorrichtung erfolgt über einen Rechner 24, in dem das gesamte Programm zum Beispiel mittels Logik-Steckkarten gespeichert ist. Gewickelt wird so, daß zunächst um den ersten Wickelkern eine Windung eines Faserstranges gelegt wird, wonach der Faserstrang um eine Halte- und Umlegestift 23 gelegt und dabei der Wickelzylinder 5 weitergedreht wird, wonach um den nächstfolgenden Wickelkern ebenfalls eine Windung des Faserstranges gelegt wird. Diese Arbeitsweise wird sukzessiv wiederholt, so daß die einzelnen Wickelkerne 6 nacheinander mit jeweils einer Windung des Faserstranges belegt werden. Hierdurch wird sichergestellt, daß die einzelnen Windungen in einer bestimmten Lage bei allen Wickelkernen gleich sind, da auch die Wickelbedingungen für alle Wickelkerne gleich sind.

Der beschriebene Wickelvorgang wird so lange wiederholt, bis die Wickelkerne vollständig belegt sind; Ergebnis ist ein geschlossenes Kraftübertragungselement 2 in Schlaufenform. (vgl. Figur 3) . Wenn der Wickelvorgang beendet ist, werden die Wickelkerne 6 von dem Wickelzylinder 5 und danach die Kraftübertragungselemente abgenommen. Die Schlaufen der Kraftübertragungselemente werden in bekannter Weise weiterbehandelt, so zum Beispiel vom Zylinder 5 geschnitten und in das Rotorblatt eingelegt. Die oben erwähnten Rotorblätter werden über den Anschlußbeschlag mit dem Rotorkopf eines Hubschraubers verbunden.

Die Wickelkerne sind, wie am besten aus Figur 3 hervorgeht, auf den Wickelzylinder 5 mit Rändelschrauben 26 über Paßstifte aufschraubbar und weisen zusätzlich noch eine abnehmbare Abdeckplatte 25 auf, die dazu dient, die Form des schlaufenförmigen Kraftübertragungselementes 2 in radialer Richtung des Wickelzylinders zu begrenzen und überschüssiges Harz bei dem Wickelvorgang aus dem Kraftübertragungselement zu pressen.

Bei der beschriebenen Maschine ist ein etwa ovaler Wickelkern verwendet worden. Selbstverständlich sind auch andere
Formen von Wickelkernen möglich; bei anderen Wickelkernen
kann der Wickelvorgang durch ein anderes Programm des Rechners
ebenfalls automatisiert ablaufen.

Messerschmitt-Bölkow-Blohm
Gesellschaft mit
beschränkter Haftung
München

Ottobrunn, 12.02.80
BT01 Cz/Hn - 8666 -

Maschine zum Wickeln von Kraftübertragungselementen aus faserverstärkten Werkstoffen

---

P a t e n t a n s p r ü c h e

1. Maschine zum Wickeln von Kraftübertragungselementen aus unidirektionalen Fasersträngen eines faserverstärkten Werkstoffes mit einem Wickelkern und einer Tränk- und einer Zuführvorrichtung für die Faserstränge, wobei Wickelkern und Zuführvorrichtung relativ zueinander zur Belegung des Wickelkernes mit Windungen gesteuert bewegbar sind, dadurch g e k e n n z e i c h n e t , daß die Maschine (1) einen Träger (Wickelzylinder 5) für mehrere gleichartige Wickelkerne (6) aufweist, die in Umfangsrichtung um den Träger verteilt angeordnet sind, und daß Träger und Zuführvorrichtung (12) zur Belegung sämtlicher Wickelkerne mit Windungen aus einem einzigen Faserstrang (16) relativ zueinander gesteuert bewegbar sind.

2. Wickelmaschine nach Anspruch 1, dadurch gekennzeichnet, daß die Wickelkerne (6) jeweils nacheinander mit nur einer Windung des Faserstranges (16) belegbar sind.

3. Wickelmaschine nach einen der vorhergehenden Ansprüche, dadurch gekennzeichnet, daß auf den Träger (5) zwischen den einzelnen Wickelkernen (6) Halte- und Umlenkelemente (23) für den Faserstrang (16) vorgesehen sind.

4. Wickelmaschine nach einem der vorhergehenden Ansprüche, dadurch gekennzeichnet, daß der Träger (5) für die Wickelkerne (6) eine Walze ist.

5. Wickelmaschine nach Anspruch 4, dadurch gekennzeichnet, daß die Zuführvorrichtung (12) für den Faserstrang (16) lediglich in Achsrichtung der Walze (5) verschiebbar ist und ein nur wenig oberhalb der Walzenoberfläche endendes Führungsstück (22) aufweist, an dem der Faserstrang freigegeben wird.

6. Wickelmaschine nach einem der vorhergehenden Ansprüche , dadurch gekennzeichnet, daß die Wickelkerne (6) auswechselbar sind.

7. Wickelmaschine nach einem der vorhergehenden Ansprüche , dadurch gekennzeichnet, daß die Wickelmaschine (1) rechnergesteuert ist.

Fig.1

1/3

Fig.2

Fig. 3

Fig. 4

Fig. 5

# EUROPÄISCHER RECHERCHENBERICHT

Europäisches
Patentamt

Nummer der Anmeldung

EP 80 10 6605

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| D | DE - A - 2 736 124 (MESSERSCHMITT-BOLKOW-BLOHM) <br><br> * Seite 11, Zeile 12 - Seite 12, Zeile 5; Figur 5 * <br><br> -- | 1 |
| | DE - A - 1 952 524 (KOPPERS COMPANY) <br><br> * Seiten 2 und 4; Seite 11, Absatz 4; Anspruch 1; Figuren 1,2,7 * <br><br> -- | 1,3, 5-7 |
| | DE - C - 561 343 (THE PARAFFINE COMPANIES) <br><br> * Seite 1 bis Seite 2, Zeile 10; Ansprüche 1-3; Figuren 1,2,6 * <br><br> -- | 1,3,5, 6 |
| A | FR - A - 2 291 844 (PLASTREX-MANURHIN) | |
| A | DE - A - 2 524 853 (VULKAN WERK) <br><br> ------------ | |

KLASSIFIKATION DER ANMELDUNG (Int Cl )

B 29 D 23/12

RECHERCHIERTE SACHGEBIETE (Int Cl )

B 29 D 3/02
          23/12
B 32 B 17/06
B 65 H 81/00
F 16 C 7/00

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 9. April 1981 | HILD |

EPA form 1503.1   06.78